# FASCICULE DE BREVET EUROPEEN

(11) **EP 0 466 832 B1**
(45) Date de publication et mention de la délivrance du brevet: **01.12.1993**
(21) Numéro de dépôt: 90907123.5
(22) Date de dépôt: 06.04.1990
(51) Int. Cl.: E04G 25/00, F16B 21/04

(54) **DISPOSITIF DE FIXATION A AXE IMPERDABLE, ET PIECES METALLIQUES D'ARMATURE OU DE CHARPENTE MUNIES D'UN TEL DISPOSITIF**
BEFESTIGUNGSVORRICHTUNG MIT UNVERLIERBARER ACHSE UND METALLBESCHLAG FÜR BEWEHRUNG ODER GERÜST MIT EINER SOLCHEN VORRICHTUNG
FIXTURE DEVICE WITH CAPTIVE AXLE AND METALLIC REINFORCEMENT OR CONSTRUCTION PIECES EQUIPPED THEREWITH

(30) Priorité: 07.04.1989 FR 8904782
(43) Date de publication de la demande: 22.01.1992
(73) Titulaire: COFFRAGES RICARD Société Anonyme, F-13763 Les Milles (FR)
(72) Inventeur: RICARD, Hubert, F-13100 Aix-en-Provence (FR)
(74) Mandataire: Marek, Pierre, Cabinet Marek
(86) Numéro de dépôt international: FR9000246
(87) Numéro de publication internationale: WO9012179

(56) Documents cités:
- FR-A- 1 250 778
- FR-A- 2 147 654
- FR-A- 2 438 188
- US-A- 1 890 663

## Description

La présente invention concerne un dispositif de fixation à axe imperdable. De manière particulièrement avantageuse, quoique non limitative, ce dispositif est destiné à constituer la fourche ou chape de fixation dont sont équipées certaines pièces métalliques d'armature ou de charpente, par exemple pour la mise en oeuvre des techniques d'étaiement ou de montage des coffrages. L'invention vise également les pièces métalliques d'armature ou de charpente telles que pièces d'étayage ou de contreventement, consoles ou passerelles d'échafaudages, etc., munies de cette fourche ou chape de fixation.

On connaît (FR-A-2.438.188), un dispositif de liaison comprenant un profilé en forme de U avec deux ailes parallèles comportant une pluralité de paires d'ouvertures en regard pour recevoir deux broches de verrouillage ; chaque broche de verrouillage porte un ergot à une extrémité et une partie coudée à l'autre extrémité, et les ouvertures ont une forme circulaire avec une encoche de forme correspondant à celle de l'ergot, l'agencement étant tel que, lorsque la broche est introduite dans les ouvertures, le poids de la partie coudée la place dans une position où l'ergot n'est pas aligné avec l'encoche.

Un inconvénient de ce dispositif réside dans le fait que les broches peuvent être facilement retirées par une action volontaire ou involontaire, ce qui n'est pas compatible avec une bonne sécurité. Cette sécurité aléatoire découle aussi du fait qu'un frottement même peu important peut empêcher la rotation automatique des broches dans la position de blocage, de sorte que celui-ci risque de ne pas être assuré.

En outre, même dans les meilleures conditions de fonctionnement, il est indispensable que les encoches soient orientées dans une direction convenable pour que le verrouillage soit automatiquement assuré, de sorte qu'un tel dispositif de liaison ne peut pas être opérant dans toutes le positions.

La présente invention a notamment pour objet de remédier à ces inconvénients.

Selon l'invention, cet objectif est atteint grâce à un dispositif de fixation à axe imperdable, comprenant une fourche comportant deux branches parallèles pourvues de trous alignés et un axe ou broche de verrouillage apte à coulisser dans lesdits trous et munie de deux butées radiales espacées dont l'écartement correspond sensiblement à la distance comprise entre les faces extérieures des portions des branches de la fourche pourvues des trous dans lesquels peut coulisser ladite broche ou axe de verrouillage, une découpure étant ménagée dans le bord du trou dans lequel peut coulisser la partie terminale de cette dernière opposée à son extrémité de manoeuvre pour le passage de la butée dont est munie ladite partie terminale, ce dispositif étant caractérisé en ce que l'une au moins des branches de la fourche est pliée de façon que sa portion libre pourvue du trou se trouve disposée à l'extérieur du plan dans lequel est située sa portion restante rattachée au fond de ladite fourche, et en ce que le bord extérieur d'au moins l'un des trous a un profil en forme de rampe ou de came.

Le dispositif comportant les caractéristiques susmentionnées de l'invention a notamment pour avantages :
- le fait que l'organe de verrouillage ne peut être retiré qu'en lui imprimant un mouvement volontaire de rotation nécessitant un effort relativement important, d'où un assemblage offrant une meilleure sécurité ;
- le fait que ce dispositif peut être mis en oeuvre dans n'importe quelle position.

Les buts, caractéristiques et avantages ci-dessus, et d'autres encore, ressortiront mieux de la description qui suit et des dessins annexés dans lesquels :

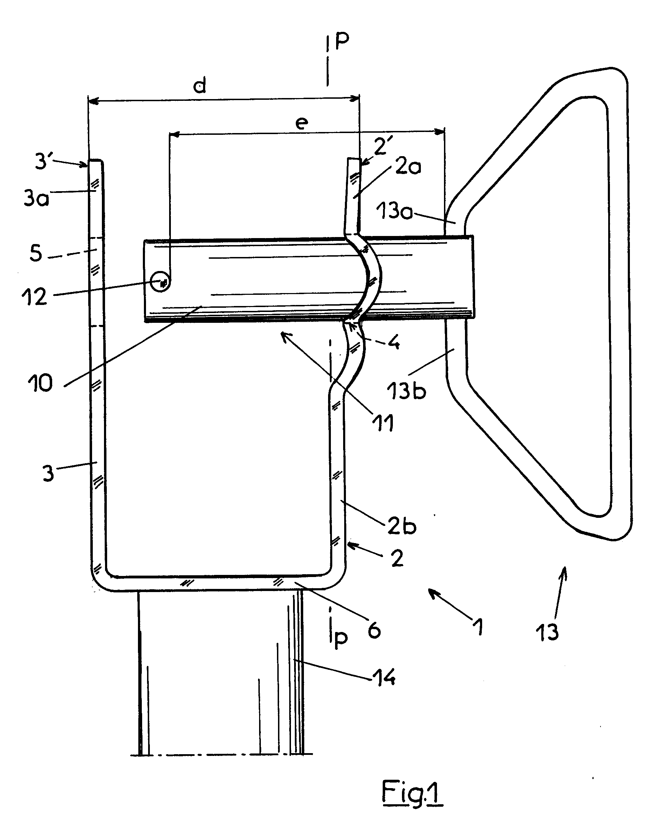

La figure 1 est une vue de face du dispositif de fixation selon l'invention.

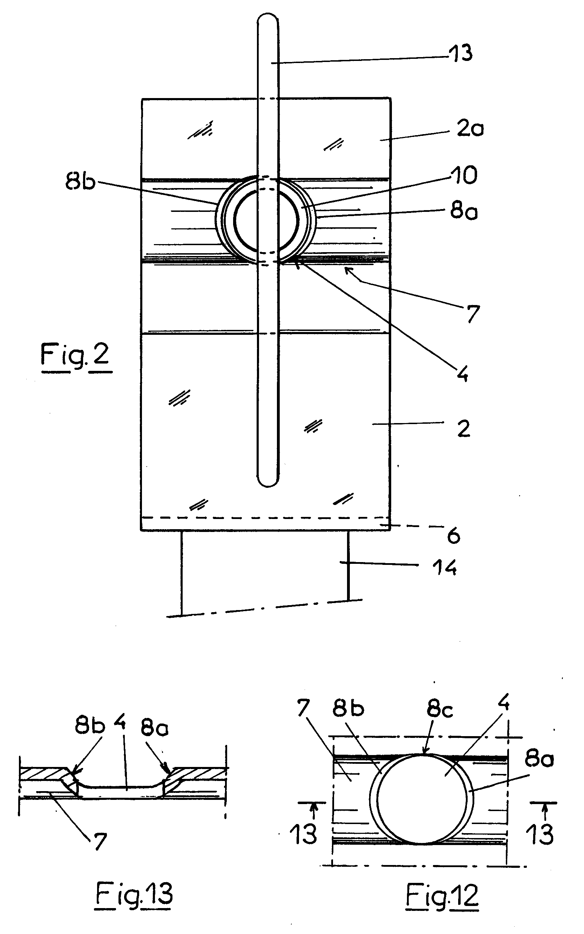

La figure 2 est une vue de côté de ce dispositif.

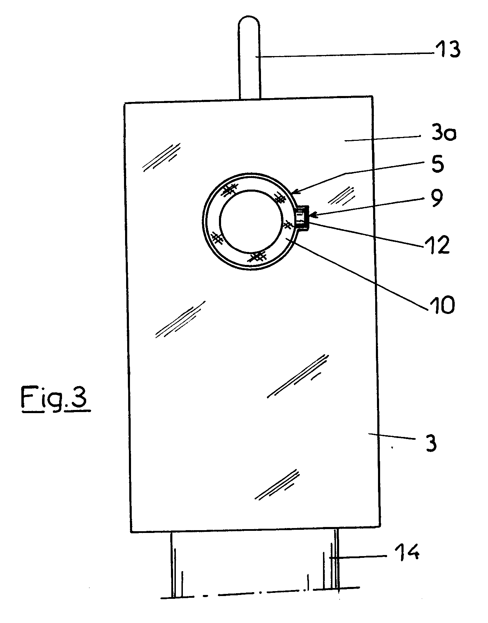

La figure 3 est une vue arrière de celui-ci.

Les figures 4 à 7 illustrent les différentes phases de la fixation de la fourche sur une poutre perforée.

Les figures 8 et 9 sont des vues de face et de détail illustrant la position de la butée équipant la partie terminale de la broche de verrouillage, lors des phases de montage correspondant, respectivement, aux figures 5 et 7.

La figure 10 est une vue de face de l'axe ou broche de verrouillage du dispositif.

La figure 11 est une vue en coupe de la branche de la fourche munie des rampes ou cames de blocage.

La figure 12 est une vue de face du trou bordé par les rampes de blocage.

La figure 13 est une vue suivant la ligne 13-13 de la figure 12.

On se reporte auxdits dessins pour décrire un exemple de réalisation intéressant, quoique nullement limitatif, du dispositif de fixation selon l'invention qui, suivant cet exemple, est constitué par une fourche à axe imperdable fixée à l'une des extrémités d'une pièce rectiligne d'armature.

Cette fourche 1 est exécutée à l'aide d'une robuste tôle métallique présentant une capacité de déformation élastique sous une pression relativement importante. Elle comporte deux branches 2 et 3 espacées et parallèles. Chacune de ces branches est pourvue d'un trou circulaire 4, 5, respectivement, aligné avec le trou de l'autre.

L'une au moins des branches de la fourche (branche 2) est pliée de façon que sa portion libre 2a pourvue du trou 4, se trouve disposée à l'extérieur du plan p-p dans lequel est située sa portion restante 2b rattachée au fond 6 de ladite fourche.

Le bord extérieur d'au moins l'un des trous 4, 5, présente un profil en forme de rampe ou de came qui peut être obtenu par tout procédé adéquat tel que soudure d'une rampe sur le bord du trou, déformation dudit bord par emboutissage, etc.

Les dessins annexés illustrent un mode d'exécution avantageux suivant lequel le trou bordé par deux cames ou rampes symétriques et opposées, est le trou 4 que présente la portion repliée vers l'extérieur 2a de la branche 2 de la fourche. D'autre part, selon ce mode d'exécution avantageux, le trou 4 est prévu dans la partie médiane d'une nervure 7 dotée d'un profil courbe dont la convexité est orientée vers l'extérieur et obtenue de manière simple par emboutissage et déformation de ladite portion.

La nervure 7 a, de préférence, une largeur égale ou sensiblement égale au diamètre du trou 4. De la sorte, les rampes 8a, 8b se trouvent séparées par une plage ou fond 8c ayant une dimension réduite grâce à laquelle l'amplitude du mouvement angulaire libre de la broche décrite ci-après est très faible.

De la sorte, les extrémités des deux portions de la nervure 7 coupée par le trou 4, constituent directement deux rampes identiques opposées 8a, 8b sensiblement demi-circulaires et placées de part et d'autre d'une ligne diamétrale perpendiculaire au fond 6 de la fourche. Chaque rampe courbe 8a, 8b, s'élève progressivement à partir de ses deux extrémités jusqu'à son sommet.

Le bord du trou destiné au passage de la portion terminale de l'axe ou broche de verrouillage est pourvu d'une petite découpure.

Suivant le mode d'exécution avantageux illustré, cette découpure 9 est prévue dans le bord du trou 5 ménagé dans la branche 3 totalement plane de la fourche 1.

Le dispositif selon l'invention comprend également un axe ou broche de verrouillage 10 comportant une tige cylindrique 11 dont le diamètre est à peine inférieur à celui des trous 4 et 5, de façon à pouvoir coulisser sans jeu excessif, dans ces derniers.

La tige 11 est munie de deux butées radiales espacées 12, 13a-13b dont l'écartement e correspond sensiblement à la distance d comprise entre les faces extérieures 2a, 3a des portions des branches 2, 3 de la fourche pourvues des trous 4, 5 dans lesquels peut coulisser ladite tige.

L'une des butées équipant la partie terminale de l'axe ou broche de fixation opposée à sa tête de manoeuvre, est constituée par un ergot 12 dimensionné pour pouvoir passer à travers la découpure 9, cet ergot étant placé très près de l'extrémité de la tige 11.

De manière avantageuse, la seconde butée peut être constituée par la ou les parties de rattachement 13a, 13b, à la tige 11, d'une poignée de manoeuvre 13, cette partie ou ces parties de rattachement ayant une orientation radiale par rapport à ladite tige.

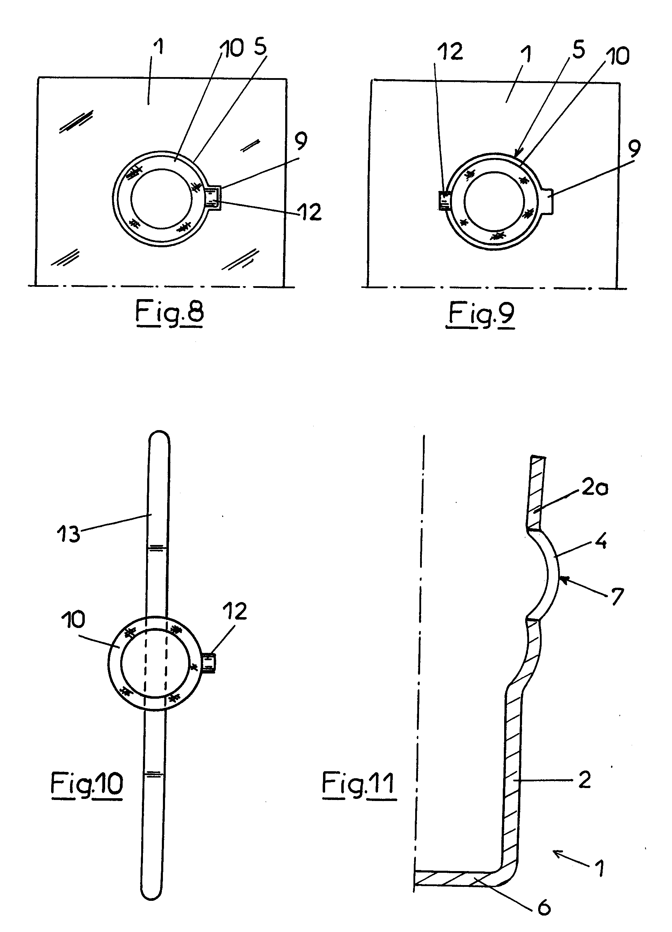

Selon d'autres dispositions caractéristiques de l'invention, la découpure 9 se trouve disposée face à la concavité de la nervure 7, tandis que l'ergot 12 a une orientation radiale décalée de 90 degrés par rapport à la butée ou aux butées 13a, 13b, comme le montre la figure 10.

Après les explications qui précèdent, on comprend que seul le bord du trou 5 est pourvu d'une découpure 9 permettant le passage de l'ergot 12, de sorte que la partie terminale de la broche de verrouillage munie dudit ergot, ne peut franchir le trou 4 et que ladite broche reste en permanence reliée à la fourche.

La fourche à axe imperdable selon l'invention peut équiper, à demeure, l'une des extrémités 14 de pièces d'armature ou de charpente diverses, telles que contrevents, étais, stabilisateurs, consoles, etc., destinées à être fixées sur différentes pièces d'ossature perforées telles que poutres, par exemple.

Cette fourche peut également être rigidement fixée, par l'intermédiaire de son fond 6 et, par exemple par soudure, à l'extrémité d'un manchon de raccordement, permettant sa fixation, par exemple par boulonnage, sur l'extrémité tubulaire d'une pièce d'armature métallique nécessitant la présence d'une telle fourche.

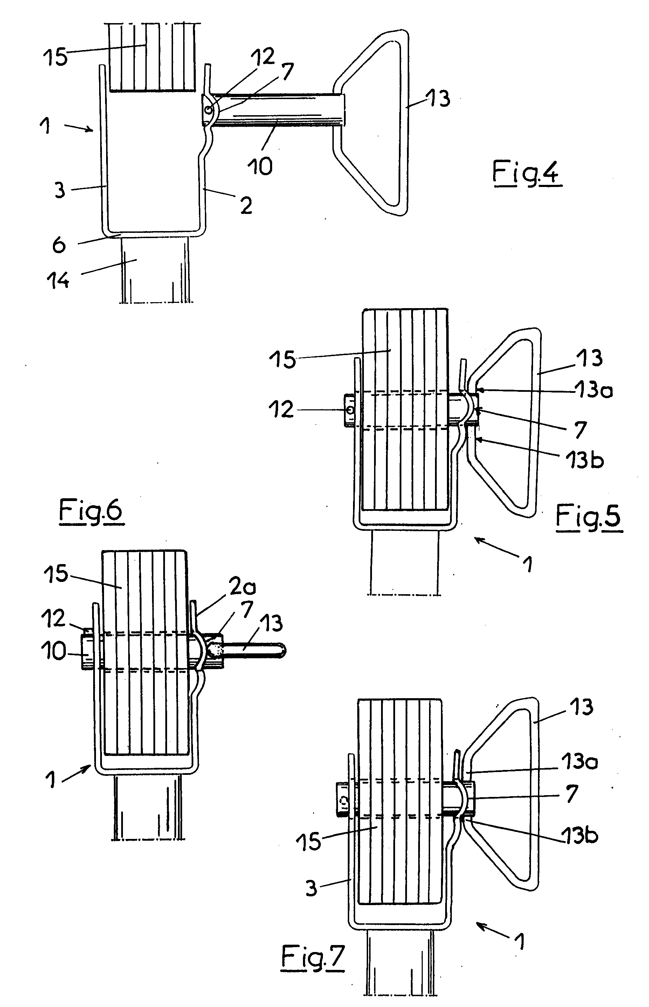

On a illustré, aux figures 4 à 7, la fixation de l'extrémité d'une pièce d'armature 14 munie d'une fourche à axe imperdable selon l'invention, sur une poutre perforée 15 constituée par un composite lamellaire, du genre de celle qui est décrite dans le document WO 86/06315.

L'axe ou broche de verrouillage 10 est d'abord tiré à fond pour dégager l'entrée de la fourche 1. On observe que, dans cette situation, l'extrémité de la broche pourvue de l'ergot 12 qui reste à l'intérieur de la fourche, occupe l'espace qui résulte du décalage vers l'extérieur de la portion libre 2a de la branche 2, tandis que ledit ergot s'escamote dans la concavité de la nervure 7 ; de la sorte ladite extrémité ne se trouve pas en saillie par rapport à la portion 2b de ladite branche (figure 4).

On introduit ensuite la poutre 15 entre les branches 2 et 3 de la fourche 1 ; puis après avoir fait coïncider l'un des perçages de ladite poutre avec les trous 4 et 5 de la fourche, on enfonce l'axe ou broche de verrouillage 10 dont l'ergot 12 franchit la découpure 9. En fin de course, les butées 13a, 13b viennent en appui contre le fond 8c des rampes ou cames 8a, 8b (figure 5).

On imprime ensuite un mouvement de rotation à la broche 10 au moyen de sa poignée 13, de façon à éloigner l'ergot 12 de la découpure 9. Dans un premier temps, les butées 13a, 13b glissent sur les portions ascendantes des rampes 8a, 8b, ce qui provoque un fléchissement de la portion libre 2a de la branche 2 en direction du centre de la fourche (figure 6), sous l'action de la poussée exercée par lesdites butées sur lesdites rampes, à l'encontre de la résistance à la flexion de ladite branche.

En poursuivant la rotation de la broche 10 au-delà d'un angle de 90 degrés, les butées 13a, 13b franchissent le sommet des rampes 8a, 8b et glissent sur les portions descendantes de ces dernières, jusqu'à ce qu'elles retombent dans le fond desdites rampes (figure 7). Dans cette position, l'ergot 12 a accompli une rotation de 180 degrés autour de l'axe de la tige et se trouve à l'opposé de la découpure 9 (figure 9).

Pour pouvoir retirer l'axe ou broche de verrouillage 10, il faut nécessairement lui imprimer un nouveau mouvement de rotation de 180 degrés, pour amener l'ergot 12 face à la découpure 9, ce qui n'est possible qu'au moyen d'une action volontaire nécessitant un effort relativement important. On comprend donc que toute rotation entrainant un retrait non désiré de la broche est impossible, quelle qu'en soit la cause (choc accidentel, vibrations, etc.).

## Revendications

1. Dispositif de fixation à axe imperdable, comprenant une fourche (1) comportant deux branches parallèles (2, 3) pourvues de trous alignés (4, 5) et un axe ou broche de verrouillage (10) apte à coulisser dans lesdits trous, et munie de deux butées radiales espacées (12, 13a-13b) dont l'écartement (e) correspond sensiblement à la distance (d) comprise entre les faces extérieures (2', 3') des portions des branches (2, 3) de la fourche (1) pourvues des trous (4, 5) dans lesquels peut coulisser ladite broche ou axe de verrouillage (10), une découpure (9) étant ménagée dans le bord du trou (5) dans lequel peut coulisser la partie terminale de cette dernière opposée à son extrémité de manoeuvre pour le passage de la butée (12) dont est munie ladite partie terminale, caractérisé en ce que l'une (2) au moins des branches de la fourche est pliée de façon que sa portion libre (2a) pourvue du trou (4) se trouve disposée à l'extérieur du plan (p-p) dans lequel est située sa portion restante (2b) rattachée au fond (6) de ladite fourche, et en ce que le bord extérieur d'au moins l'un (4) des trous a un profil en forme de rampe ou de came (8a-8b).

2. Dispositif à axe imperdable selon la revendication 1, caractérisé en ce que le trou (4) dont le bord présente un profil en forme de rampe ou de came (8a-8b) est délimité par deux rampes identiques (8a, 8b) disposées de part et d'autre d'un diamètre dudit trou.

3. Dispositif à axe imperdable suivant l'une des revendications 1 ou 2, caractérisé en ce que la ou les rampes (8a, 8b) est ou sont disposée(s) autour de l'un (4) des trous, tandis que la découpure (9) est ménagée dans le bord du second trou (5).

4. Dispositif à axe imperdable selon l'une des revendications 2 ou 3, caractérisé en ce que les rampes (8a, 8b) sont constituées par le bord ou extrémité interne des deux portions d'une nervure (7) dotée d'un profil courbe obtenue par emboutissage et dont la convexité est orientée vers l'extérieur, cette nervure étant coupée par le trou (4) délimité par lesdites rampes.

5. Dispositif à axe imperdable selon la revendication 4, caractérisé en ce que la nervure (7) a une largeur égale ou sensiblement égale au diamètre du trou (4).

6. Dispositif à axe imperdable selon la revendication 4, caractérisé en ce que la découpure (9) autorisant le passage de la butée (12) équipant la partie terminale de l'axe ou broche de verrouillage (10) est disposée face à la concavité de la nervure (7).

7. Dispositif à axe imperdable selon l'une quelconque des revendications 1 à 6, caractérisé en ce que l'extrémité de la tige (11) de l'axe ou broche de verrouillage (10), proche de la tête de manoeuvre de ce dernier, est munie de deux butées (13a, 13b) diamétralement opposées.

8. Dispositif à axe imperdable selon l'une quelconque des revendications 1 à 7, caractérisé en ce que la butée radiale (12) équipant la partie terminale de l'axe ou broche de verrouillage (10) est décalée de 90 degrés par rapport à la ou aux butées radiales (13a, 13b) dont est munie l'extrémité dudit axe ou broche, proche de la tête de manoeuvre de celui-ci.

9. Dispositif à axe imperdable suivant l'une quelconque des revendications 1 à 8, caractérisé en ce que la ou les butées (13a, 13b) équipant l'extrémité de l'axe ou broche de verrouillage (10), proche de la tête de manoeuvre de celui-ci, est ou sont constituée(s) par la ou les parties de rattachement d'une poignée de manoeuvre (13) à ladite extrémité.

10. Pièces métalliques d'armature ou de charpente telles que, par exemple, contrevents, étais, consoles, stabilisateurs, comportant au moins une extrémité de fixation sur un élément d'ossature, caractérisées en ce que cette extrémité est munie d'une fourche à axe imperdable selon l'une quelconque des revendications 1 à 9.

## Patentansprüche

1. Befestigungsvorrichtung mit unverlierbarer Achse mit einer Gabel (1), umfassend zwei parallele Schenkel (2, 3) mit fluchtenden Öffnungen (4, 5) und eine Verriegelungsachse oder -spindel (10), die durch diese Öffnungen gleitet und mit zwei radialen, beabstandeten Stoppern (12,13a-13b) versehen ist, deren Abstand (e) im wesentlichen der Entfernung (d) zwischen den Außenseiten (2', 3') der mit den Öffnungen (4, 5), in welchen die Verriegelungsspindel oder -achse (10) gleiten kann, versehenen Abschnitte der Schenkel (2, 3) der Gabel (1) entspricht, wobei ein Ausschnitt (9) am Rand der Öffnung (5) ausgespart ist, in dem der dem Bedienungsende gegenüberliegende Endabschnitt der Spindel zum Durchtritt des Stoppers (12), mit dem der Endabschnitt versehen ist, gleiten kann, dadurch gekennzeichnet, daß zumindest der eine Schenkel (2) der Gabel so gebogen ist, daß sein mit der Öffnung (4) versehener freier Abschnitt (2a) außerhalb der Ebene (p-p) angeordnet ist, in der der übrige, am Boden (6) der Gabel befestigte Abschnitt (2b) liegt, und dadurch, daß der Außenrand mindestens einer der Öffnungen (4) ein rampen- oder nockenförmiges Profil (8a-8b) aufweist.

2. Vorrichtung mit unverlierbarer Achse nach Anspruch 1,
dadurch gekennzeichnet, daß die Öffnung (4), deren Rand ein rampen- oder nockenförmiges Profil (8a-8b) aufweist, von zwei identischen, auf zwei gegenüberliegenden Seiten auf einem Durchmesser der Öffnung angeordneten Rampen (8a, 8b) begrenzt ist.

3. Vorrichtung mit unverlierbarer Achse nach einem der Ansprüche 1 oder 2,
dadurch gekennzeichnet, daß die Rampe oder die Rampen (8a, 8b) um eine der Öffnungen (4) angeordnet ist oder sind, während der Ausschnitt (9) am Rand der zweiten Öffnung (5) ausgespart ist.

4. Vorrichtung mit unverlierbarer Achse nach einem der Ansprüche 2 oder 3,
dadurch gekennzeichnet, daß die Rampen (8a, 8b) vom Rand oder der Innenseite der beiden Abschnitte einer Verstärkungsrippe (7) gebildet werden, die ein durch Austiefen erzieltes gekrümmtes Profil aufweist und deren Konvexität zur Außenseite hin gerichtet ist, wobei diese Verstärkungsrippe durch die von den Rampen begrenzte Öffnung (4) durchschnitten wird.

5. Vorrichtung mit unverlierbarer Achse nach Anspruch 4,
dadurch gekennzeichnet, daß die Verstärkungsrippe (7) eine dem Durchmesser der Öffnung (4) gleiche Breite oder im wesentlichen gleiche Breite aufweist.

6. Vorrichtung mit unverlierbarer Achse nach Anspruch 4,
dadurch gekennzeichnet, daß der die Durchführung des Stoppers (12), mit dem der Endabschnitt der Verriegelungsachse oder -spindel (10) versehen ist, ermöglichende Ausschnitt (9) gegenüber der konkaven Seite der Verstärkungsrippe (7) angeordnet ist

7. Vorrichtung mit unverlierbarer Achse nach einem der Ansprüche 1 bis 6,
dadurch gekennzeichnet, daß das Ende des Stifts (11) der Verriegelungsachse oder -spindel (10), das sich in der Nähe des Bedienungskopfes von letzterer befindet, mit zwei sich diametral gegenüberliegenden Stoppern (13a, 13b) ausgestattet ist.

8. Vorrichtung mit unverlierbarer Achse nach einem der Ansprüche 1 bis 7,
dadurch gekennzeichnet, daß der radiale Stopper (12), mit dem das Ende der Verriegelungsachse oder -spindel (10) ausgerüstet ist, im Vergleich zu dem oder den radialen Stoppern (13a, 13b), mit denen das Ende der Achse oder der Spindel in der Nähe des Bedienungskopfes versehen ist, um 90 Grad versetzt ist.

9. Vorrichtung mit unverlierbarer Achse nach einem der Ansprüche 1 bis 8,
dadurch gekennzeichnet, daß der oder die Stopper (13a, 13b), mit dem oder denen der Endpunkt der Verriegelungsachse oder -spindel (10) in der Nähe des Bedienungskopfes ausgestattet ist oder sind, von dem Befestigungsteil oder den Befestigungsteilen eines Bedienungshandgriffs (13) an diesem Ende gebildet wird oder gebildet werden.

10. Metallische Armaturen- oder Konstruktionsteile, wie beispielsweise Streben, Stützen, Konsolen, Stabilisatoren, die mindestens ein Befestigungsende auf einer Tragekonstruktion aufweisen, dadurch gekennzeichnet, daß dieses Ende mit einer Gabel mit unverlierbarer Achse nach einem der Ansprüche 1 bis 9 versehen ist.

## Claims

1. Fixing device with captive shaft, comprising a fork (1) having two parallel arms (2, 3) provided with aligned holes (4, 5) and a locking shaft or pin (10) adapted to slide in said holes, and equipped with two spaced radial stops (12, 13a-13b) whose spacing (e) corresponds substantially to the distance (d) between the outer faces (2', 3') of the portions of the arms (2, 3) of the fork (1) provided with holes (4, 5) in which said locking pin or shaft (10) can slide, there being incorporated a cutout (9) in the rim of the hole (5) in which the terminal part of said pin or shaft opposite its operating extremity can slide so as to pass the stop (12) with which said terminal part is equipped,
characterised in that one (2) at least of the arms of the fork is bent so that its free portion (2a) provided with the hole (4) is disposed outside the plane (p-p) in which is situated its remaining portion (2b) joined to the bottom (6) of said fork, and in that the outer rim of at least one (4) of the holes has a ramp-shaped or cam-shaped profile (8a-8b).

2. Device with captive shaft according to claim 1, characterised in that the hole (4) whose rim presents a ramp-shaped or cam-shaped profile (8a-8b) is delimited by two identical ramps (8a, 8b) disposed to either side of a diametrical line through said hole.

3. Device with captive shaft according to either of claims 1 and 2, characterised in that the ramp or ramps (8a, 8b) is or are disposed around one (4) of the holes, whereas the cutout (9) is incorporated in the rim of the second hole (5).

4. Device with captive shaft according to either of claims 2 and 3, characterised in that the ramps (8a, 8b) are constituted by the inner rim or extremity of the two portions of a rib (7) which has been embossed to give it a curved profile and the convexity of which is orientated outwards, said rib being intersected by the hole (4) delimited by said ramps.

5. Device with captive shaft according to claim 4, characterised in that the width of the rib (7) is the same or substantially the same as the diameter of the hole (4).

6. Device with captive shaft according to claim 4, characterised in that the cutout (9) allowing the stop (12) to be passed with which the terminal part of the locking shaft or pin (10) is fitted, is disposed opposite the concavity of the rib (7).

7. Device with captive shaft according to any of claims 1 to 6, characterised in that the extremity of the shank (11) of the locking shaft or pin (10), close to the operating head of the latter, is equipped with two diametrically opposed stops (13a, 13b).

8. Device with captive shaft according to any of claims 1 to 7, characterised in that the radial stop (12) with which the terminal part of the locking shaft or pin (10) is equipped is offset by 90 degrees with respect to the radial stop or stops (13a, 13b) with which the extremity of said shaft or pin is fitted, close to the operating head of the latter.

9. Device with captive shaft according to any of claims 1 to 8, characterised in that the stop or stops (13a, 13b) with which the extremity of the locking shaft or pin (10) is equipped, close to the operating head thereof, is or are constituted by the part or parts connecting an operating handle (13) to said extremity.

10. Metal parts for reinforcement or structural work, such as for example shutters, stays, brackets and stabilisers, having at least one fixing extremity on a frame member, characterised in that said extremity is fitted with a fork with captive shaft according to any of claims 1 to 9.
